# EUROPÄISCHE PATENTSCHRIFT

(11) **EP 2 878 814 B1**
(45) Veröffentlichungstag und Bekanntmachung des Hinweises auf die Patenterteilung: **13.09.2017**
(21) Anmeldenummer: 13195209.5
(22) Anmeldetag: 29.11.2013
(51) Int. Cl.: F03G 7/06, F16K 31/00, F16K 31/02

(54) **Stellantrieb**
Actuator
Mécanisme de commande

(43) Veröffentlichungstag der Anmeldung: 03.06.2015
(73) Patentinhaber: Siemens Schweiz AG, 8047 Zürich (CH)
(72) Erfinder: Huwiler, Adrian, 6038 Honau (CH); Varekamp, Robin Adam, 8808 Pfäffikon SZ (CH)
(74) Vertreter: Maier, Daniel Oliver

(56) Entgegenhaltungen:
- EP-A1- 0 173 433
- EP-A2- 0 304 944
- US-A- 3 613 732

## Beschreibung

Die Erfindung betrifft einen Stellantrieb gemäß dem Oberbegriff des Anspruchs 1.

Darin verstellt ein Formgedächtniselement infolge seiner Beheizung ein Anschlusselement, welches seinerseits bei Montage des Stellantriebes beispielsweise auf einem Ventil dessen Stößel verstellt. Ein Wärmeleitelement berührt das Formgedächtniselement, insbesondere auch um es gleichmässig aufzuwärmen. Während langen Heizperioden bricht ein Schaltelement diese Wärmeleitberührung ab.

Stellantriebe mittels Formgedächtniselemente finden unter anderem in der Automobiltechnik und in der Haustechnik bereits Anwendung, insbesondere für die Entriegelung von Türschlössern oder neulich für die Sicherheitsschließung von Luftklappen im Brandfall. In diesen Anwendungen müssen sie preiswert, einfach in großen Stückzahlen herstellbar, zuverlässig und beständig sein, nämlich einen Mindestarbeitsweg und eine Mindestkraft, sowie eine Mindestanzahl an Stellzyklen oder eine Mindestlebensdauer, leisten. Je nach Anwendung ist eine Maximaleinschaltzeit oder eine Maximalabschaltzeit einzuhalten.

Aus dem US-Patent 3,613,732 ist ein temperaturabhängiges Ventil-Betätigungselement bekannt, welches ein Steuerelement zum Steuern der Position eines Ventilteils aufweist und aus einem Formgedächtnismetall konstruiert ist. Das Steuerelement weist eine ursprüngliche Gestalt und eine verformte Gestalt auf. Das Ventil-Betätigungselement umfasst weiter Vorspannmittel zum Vorspannen des Ventilteils in einer ersten Position, wobei dann das Steuerelement die verformte Gestalt einnimmt. Das Ventil-Betätigungselement weist zudem temperaturgesteuerte Mittel zum Umkehren der Position des Ventilteils zurück zur ursprünglichen Gestalt auf, um das Ventilteil in eine zweite Position zu bewegen.

Aus der europäischen Patentanmeldung 0 173 433 A1 ist ein fernsteuerbares Mittel zum Einstellen der Ausrichtung eines zu steuernden Bauteils, wie z.B. eines Rückspiegels, bekannt. Das fernsteuerbare Mittel umfasst ein Drehlager für das zu steuernde Bauteil auf einem Trägerteil sowie Mittel zum Bereitstellen einer Reibungskraft auf das Drehlager, um Drehbewegungen des zu steuernden Bauteils zu verhindern. Das fernsteuerbare Mittel weist mindestens zwei Federn aus einer Formgedächtnislegierung auf, welche das zu steuernde Bauteil mit dem Trägerteil auf der gegenüberliegenden Seite des Drehlagers verbinden. Jede Feder ist derart konstruiert, dass sie genügend Kraft aufbringt, um die Reibungskraft des Drehlagers zu überwinden, wenn sich die Formgedächtnislegierung in der gespannten Phase befindet. Jedoch bringt die Formgedächtnislegierung dann nicht genügend Kraft auf, um die Reibungskraft zu überwinden, wenn sich Formgedächtnislegierung in der entspannten Phase befindet. Die Federn werden elektrisch beheizt, um den Phasenübergang auszulösen.

US2001/0038082A1 beschreibt einen Stellantrieb mittels Formgedächtniselement für ein Regelventil, wobei ein Einsatz in der industriellen Herstellung genannt ist, insbesondere in der Halbleiterindustrie, also in einem sehr stabilen Klima. Eine Stellungsregelung fordert zu jeder Zeit eine genaue Dosierung von Heizung oder Kühlung. Deswegen wird ein aktives Kühlelement im Sinne eines Drehventilators, eines Piezo-Ventilators oder eines Peltier-Halbleiters vorgeschlagen. Auf ein Wärmeleitelement und auf ein Schaltelement wird gänzlich verzichtet. Zusätzlich wird zumindest ein Sensor und praktisch ein Mikroprozessor benötigt. Der auf Spulen aufgewickelte Formgedächtnisdraht lässt sich nicht einfach in hohen Stückzahlen assemblieren. Ventilatoren verursachen Geräusche und würden außerhalb eines Reinraums die Ablage von Staub auch an für den Mechanismus heiklen Stellen fördern.

Es werden bogenförmige Formgedächtniselemente für Antriebe mit unbestimmter Anwendung im Artikel "Actuators and drives based on CU-AL-NI shape memory single crystals" von A.Priadko, S.Pulnev, I.Viahhi, V.Vetrov and V.Yudin vom Institute of Robotics and Technical Cybernetics in St-Petersburg, Russland, vorgeschlagen. Darin ist die Heizung der Formgedächtniselemente mittels eines aufgewickelten Widerstanddrahts abgebildet, was eine gleichmäßige Erwärmung ermöglicht, aber dessen Kühlung erschwert. Ein Wärmeleitelement ist nicht vorhanden, und ein Schaltelement ebenso nicht.

US4765139 beschreibt einen Antrieb mit ebenso einem geraden oder mit einem bogenförmigen Formgedächtniselement. Dessen Beheizung und Kühlung erfolgt mittels aufwendiger thermoelektrischer Halbleitergeneratoren via Metalldrahtbürsten die es auf einer kleinen Oberfläche berühren. Somit wird das Formgedächtniselement schnell aber nicht gleichmäßig und nicht kostengünstig beheizt und abgekühlt. Ein Schaltelement ist nicht vorhanden.

Stellantriebe mittels Formgedächtniselemente sollen auch in Regelanlagen für Heizung, Lüftung oder Klima zum Einsatz kommen, insbesondere um Ventile für Wasser, Kältemittel oder Gas zu betätigen. Zu diesem Zweck werden Stellantriebe benötigt, die im Stellbereich von 2 bis 3 mm und bei Stellkräften von rund 100 N arbeiten, wobei solche Werte bloß als typisches Beispiel oder als Andeutung einer Größenordnung anzunehmen sind. Diese Leistungen gilt es typisch über 100'000 Stellzyklen während 8 Jahren zu erhalten.

Sowohl das Einschalten wie auch das Abschalten von Stellantrieben in Regelanlagen für Heizung, Lüftung oder Klima soll innerhalb einer Maximalzeit erfolgen. Diese Maximalzeiten sind von der Anwendung abhängig und betragen beispielsweise für Einschalten und Abschalten je eine Minute. Solche Stellantriebe sollten auch einen Maximalverbrauch pro Jahr einhalten, je nach Anwendung bis zu etwa 30 kWh. Sie müssen ausreichend robust sein, um eine Überbelastung im Betrieb zu bestehen, wie zum Beispiel schlagartig durch einen Fremdkörper im zu stellenden Gegenstand, oder durch Verschleiß über die Zeit auftreten mag. Vor allem jedoch müssen im Wohnbereich installierte Stellantriebe einen nahezu geräuschlosen Betrieb aufweisen.

Bislang sind bloß Stellantriebe geeignet, die mittels eines Elektromotors mit einem Getriebe, oder aber auf Basis einer Magnetspule, oder aber dank eines wachsgefüllten, beheizbaren Zylinders mit Hubkolben, funktionieren. Der letztgenannte Lösungsansatz ermöglicht einen besonders leisen Betrieb.

Seit langem wird versucht auch Stellantriebe mittels eines Formgedächtniselementes zu entwickeln, die solchen Anforderungen gewachsen sind. Offensichtliche Vorteile von Formgedächtniselementen nämlich sind deren geräuschloser Betrieb und die vergleichsweise tiefen Komponentenkosten.

Eine Herausforderung dabei ist der Temperaturhaushalt, erstens weil das Heizelement während typisch langer Betätigung das Formgedächtniselement auf erhöhter Temperatur halten muss. Eine Wärmeisolierung des Formgedächtniselementes würde zwar Energieverluste verringern, sich aber nachteilig auf dessen Abkühlung auswirken. Dies würde die Rückkehr des Formgedächtniselementes zur Ausgangsform innerhalb von der vorgegebenen Maximalabschaltzeit gefährden. Erschwerend kommt hinzu, dass der Stellantrieb wechselnd hohen Temperaturen aus der Umgebung ausgesetzt ist, bei der das Formgedächtniselement zögerlich zur Ausgangsform zurückkehrt. Zu anderen Betriebszeiten mag die Umgebungstemperatur tief sein, was dann die Einschaltzeit vergrößert. Insbesondere Ventilstellantriebe in eng bemessenen Räumen mit Heizleitungen sind manchmal hohen Temperaturen ausgesetzt.

Als zusätzliche Herausforderung muss ein Stellantrieb mittels Formgedächtniselementes in Regelanlagen für Heizung, Lüftung oder Klima im Vergleich zu den üblichen Anwendungen viel Kraft entwickeln. Aus Überlegungen der einfachen Herstellung und der Vermeidung eines Getriebes ist ein großer Einfachquerschnitt eines kompakten Formgedächtniselementes gegenüber dem Mehrfachquerschnitt eines aufgewickelten Formgedächtnisdrahtes zu bevorzugen. Dies jedoch verkleinert seine Oberfläche gegenüber seinem Volumen, was die Herausforderung bezüglich seines Temperaturhaushalts nochmals verschärft.

Ebenso haben Dauerversuche gezeigt, dass man mit Erwärmung bloß an einer kleinen Oberfläche des Formgedächtniselementes die hohe Kraft und die Mindestanzahl an Stellzyklen mit dem Mindestarbeitsweg nicht zuverlässig einhalten kann, weshalb die Aufwärmung des Formgedächtniselementes bevorzugt gleichmäßig stattfinden soll.

EP304944A2 zeigt Ventilantriebe in Regelanlagen für Heizung, Lüftung oder Klima die scheibenförmige Formgedächtnisringe aufweisen. Bei Beheizung drehen die Formgedächtnisringe sich je zu einem abgestumpften Kegel aus, wobei praktisch jede Berührung mit einem zentral angeordneten Wärmeleitelement verlorengeht. Optional werden sie durch Fluten mit der zu regelnden Flüssigkeit beheizt oder abgekühlt. Ein Schaltelement, das separat eine Wärmeleitberührung zwischen dem Wärmeleitelement und dem Formgedächtniselement abbrechen und erstellen kann, ist nicht gezeigt. Unbekannt ist, ob solche Ventilantriebe je im Markt erhältlich gewesen sind.

In EP922892A1 ist ein Stellantrieb für die Anwendung in Regelanlagen für Heizung, Lüftung oder Klima beschrieben, um ein Ventil zwischen zwei Stellpunkten hin und her zu schalten, und zwar mit reversibler Einstellung der Arbeitsrichtung. Er verwendet beispielsweise ein aus einer Formgedächtnislegierung bestehendes Metallband, welches beim Aufheizen seine Länge ändert. Ein Wärmeleitelement und ein Schaltelement fehlen. Ein solcher Stellantrieb ist nicht im Markt erhältlich.

Mit EP19269288A1 wurde ein Stellantrieb veröffentlicht, der ein Ventil zwischen zwei Stellpunkten hin und her schalten soll. Ein Wärmeleitelement erstreckt sich bloß zwischen dem aus einer Legierung mit eingeprägtem Formgedächtnis bestehenden metallischen Bauteil und dem Heizelement. Es berührt eine kleine Oberfläche des Bauteils an zumindest einer Längsseite und dort über einen wesentlichen Teil dessen Breite, ist jedoch offensichtlich ungeeignet, um die Anforderungen des Temperaturhaushaltes einhalten zu können. Das Bauteil selbst ist im Wesentlichen gerade, weil in einem Bogen, gestaltet, welcher Bogen sich bei seiner Beheizung streckt. Es ist im Wesentlichen quer zur Bewegungsrichtung des Ventilstößels orientiert. Ein solcher Stellantrieb ist zur Zeit nicht im Markt erhältlich.

Ein Stellantrieb gemäß dem Oberbegriff des Anspruchs 1 ist in einer bislang unveröffentlichten europäischen Patentanmeldung mit der Amtsnummer EP12186727 erwähnt worden. In einer nicht dargestellten Ausführung wird ein Wärmeleitelement auf Distanz zum Formgedächtniselement gebracht, wenn das Formgedächtniselement einmal aufgewärmt worden ist und die korrespondierende Stellung des Stellantriebs über eine längere Zeit gefragt bleibt. Beispielsweise wird dazu ein kleineres, zusätzliches Formgedächtniselement eingeschaltet.

Der Erfindung liegt die Einsicht zugrunde, dass man Stellantriebe mittels eines Formgedächtniselementes mit einfachen mechanischen Mitteln wesentlich verbessern und insbesondere zu Anwendungen in Regelanlagen für Heizung, Lüftung oder Klima befähigen kann.

Die erfindungsgemäße Lösung wird durch die Merkmale des Anspruchs 1 dargestellt. Diese ermöglichen innerhalb von den weit variablen Betriebsumständen eine nochmals optimierte Balance zwischen Einschaltzeit, Abschaltzeit, Energieeffizienz und Beständigkeit.

Ein Schaltelement kann eine Wärmeleitberührung zwischen zumindest einem Wärmeleitelement und entweder dem Formgedächtniselement oder zumindest einem dem Formgedächtniselement berührenden Wärmeleitelement abbrechen und wieder erstellen. Nach einer Beheizung des Formgedächtniselementes, während welcher es das Anschlusselement in eine Endstellung verstellt hat und das Schaltelement die Wärmeleitberührung abgebrochen hat, erstellt das Schaltelement die Wärmeleitberührung schneller, als das Formgedächtniselement das Anschlusselement in eine gegenüberliegende Endstellung verstellt. Dies gilt für einen Betrieb in dem der Stellantrieb eine bestimmungsgemässe Last zu verstellen hat. Falls das Schaltelement die Wärmeleitberührung schneller erstellt obwohl der Stellantrieb gar keine Arbeit verrichten muss, so ist diese Anforderung auf jedem Fall erfüllt. Vorzugsweise erstellt das Schaltelement die Wärmeleitberührung innerhalb von 12 Sekunden, falls der Stellantrieb bei Raumtemperatur betrieben wird.

Das Schaltelement umfasst beispielsweise ein elektrisches Relais. Bevorzugt jedoch ist es zumindest aus einem Körper gebildet, dessen Form sich ändert um die Wärmeleitberührung abzubrechen oder zu erstellen, wie einem piezoelektrischen Aktuator.

In diesen Beispielen erfolgt die sogenannte Abbruchbetätigung des Schaltelementes oder dessen Erstellungsbetätigung mit Elektrizität. Vorzugsweise jedoch ist die Abbruchbetätigung des Schaltelementes dessen Beheizung, und ist die Erstellungsbetätigung die Beendung dessen Beheizung. Vorteilhaft beheizt dann das Heizelement für das Formgedächtniselement bei seiner Betätigung auch das Schaltelement.

Bevorzugt ist das Schaltelement aus einem wärmeleitenden Körper gebildet, dessen Form sich ändert damit der Körper bei Erstellungsbetätigung des Schaltelementes selbst die Wärmeleitberührung machen kann. Am besten ist dieser Körper im Wesentlichen länglich gestaltet und nur in der Nähe eines seiner Enden mit einem Wärmeleitelement oder unmittelbar mit einem Heizelement verbunden.

Vorzugsweise umfasst das Schaltelement einen Körper, der aus zumindest zwei Materialien mit unterschiedlichen Wärmeausdehnungskoeffizienten zusammengesetzt ist. Der Körper ist insbesondere ein Thermobimetall, was vorteilhaft mit sich bringt, dass das Schaltelement ziemlich gut wärmeleitend ist.

Vorteilhaft weist der Stellantrieb einen Metallkörper auf, dessen gesamte Oberfläche frei von Berührung durch das Formgedächtniselement oder durch das Heizelement ist, insbesondere eine ohnehin vorhandene Rückstellfeder und bevorzugt zumindest teilweise das Gehäuse. Bei einer Abbruchbetätigung bricht dann das Schaltelement eine Wärmeleitberührung zwischen einerseits entweder dem Metallkörper oder zumindest einem dem Metallkörper berührenden Wärmeleitelement, und andererseits entweder dem Formgedächtniselement oder zumindest einem dem Formgedächtniselement berührenden Wärmeleitelement ab. Umgekehrt erstellt das Schaltelement bei einer Erstellungsbetätigung diese Wärmeleitberührung.

Nachfolgend werden Ausführungsbeispiele der Erfindung anhand der Figuren beschrieben.
Figur 1 zeigt schematisch ein Schnittbild eines erfindungsgemäßen Stellantriebes, sowie eines Wasserventils auf dem er montiert ist.
Figur 2 zeigt aus einer anderen Perspektive schematisch und teilweise den Stellantrieb nach Figur 1, sowie den Wasserventil auf dem er montiert ist.
Figur 3 zeigt aus einer anderen Perspektive schematisch ein Formgedächtniselement, ein Schaltelement, ein Heizelement und ein Wärmeleitelement des Stellantriebes nach Figur 1.
Figur 4 zeigt aus der Perspektive von Figur 3 schematisch das Formgedächtniselement, ein alternatives Schaltelement, das Heizelement und ein alternatives Wärmeleitelement eines erfindungsgemäßen Stellantriebs nach Figur 1.

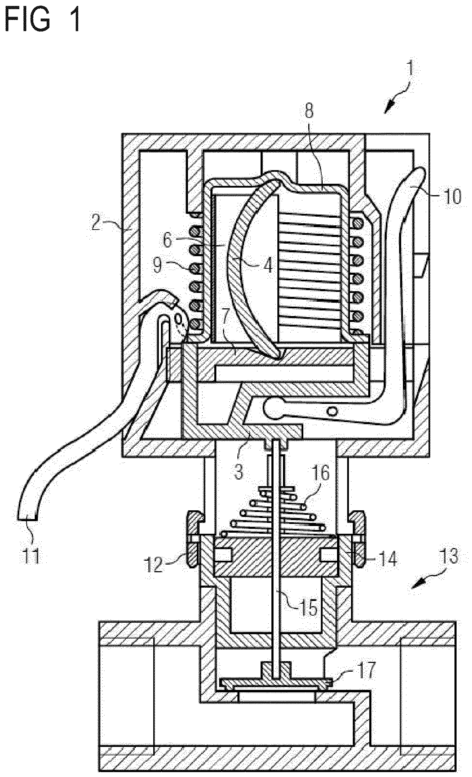

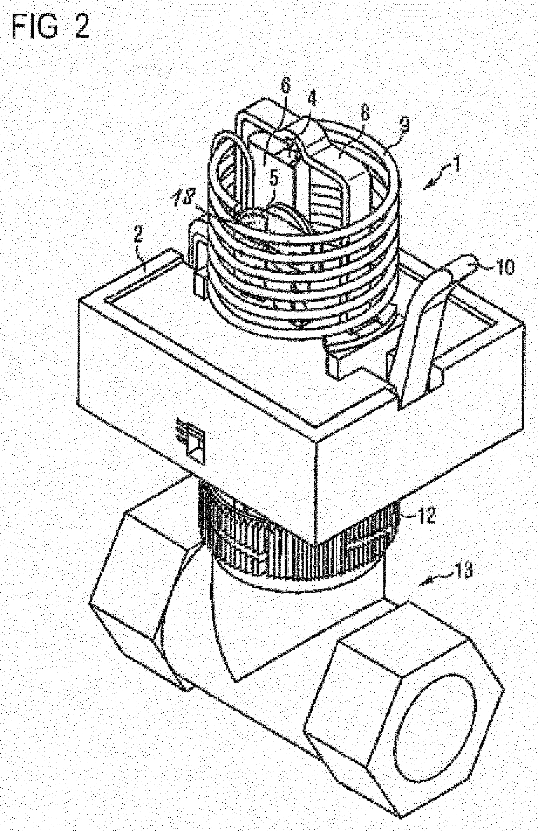

In Figur 1 und Figur 2 umfasst der Stellantrieb 1 ein Gehäuse 2, ein Anschlusselement 3, ein Formgedächtniselement 4, ein Heizelement 5 und ein Wärmeleitelement 6. In dieser Stellung ist das Formgedächtniselement 4 nicht durch seine Beheizung eingeschaltet worden.

Zwecks günstiger Fertigung besteht das Wärmeleitelement 6 aus einem Metallblech, im Sinne eines "sheet metal". Viele Legierungen sind ausreichend wärmeleitfähig und im richtigen Ausmaß biegbar. Es hat sich gezeigt, dass solche mit einem Gewichtsanteil von zumindest 90% an Kupfer, allfällig mit einer korrosionsfesten und glatten Beschichtung, besonders geeignet sind. In einer nicht dargestellten Ausführung mag das Wärmeleitelement dank gut wärmeleitender Ankopplung zusätzlich Metallteile des Gehäuses beinhalten. Die obere Umhüllung des Gehäuses 2 besteht aus Metall.

Das Gehäuse 2 umfasst ein starr verbundenes Gehäuseteil 7, in welchem eine Aussparung ein Ende des bogenförmigen Formgedächtniselementes 4 lose aufnimmt. Ähnlich wird ein jochförmiges Übertragungselement 8 unter Druck einer Feder 9 gegen das Anschlusselement 3 gehalten. Eine Aussparung zentral im Übertragungselement 8 nimmt das andere Ende des bogenförmigen Formgedächtniselementes 4 lose auf. Beide Aussparungen sind im Wesentlichen trichterförmig gestaltet, um die abgeschrägten Enden des Formgedächtniselementes 4 bei dessen Formänderung zu zentrieren.

Die untere Umhüllung des Gehäuses 2, welche in Figur 2 ohne die obere Umhüllung dargestellt ist, und das Gehäuseteil 7 bestehen aus wärmeisolierendem Kunststoff, damit eine thermische Ankupplung mit dem Wasser im Ventil weitgehend vermieden wird.

Das Formgedächtniselement 4 liegt an seinen Längsseiten die sich parallel zur Schnittebene in der Figur 1 erstrecken, an Wärmeleitelementflächen des Wärmeleitelementes 6 an. Seine Oberfläche, auf der das Wärmeleitelement 6 es berührt, erstreckt sich über einen wesentlichen Teil seiner Breite. Diese Wärmeleitelementflächen drücken leicht federnd gegen das Formgedächtniselement 4 und tragen zu dessen Halterung bei. Somit liegt das Wärmeleitelement 6 während seiner Berührung zumindest teilweise verschiebbar am Formgedächtniselement 4 an. Je nach Dimensionierung und Materialauswahl mag es vorteilhaft sein, während dessen Formänderung die Bewegung des Formgedächtniselementes 4 entlang den Wärmeleitelementflächen durch eine Wärmeleitpaste zu schmieren und thermisch zu kontaktieren. In einer nicht dargestellten Ausführung mag das Formgedächtniselement spiralförmig gestaltet sein und außenseitig eine Wärmeleithülse berühren.

Das Formgedächtniselement 4 besteht aus einer bekannten Legierung, hauptsächlich aus Nickel und Titan, welche der Fachmann anhand der Anforderungen aus im Handel leicht erhältliche Legierungen auswählen kann. Beim Beheizen von etwa 70 °C bis knapp 100 °C wechselt sie ihre Struktur namens Martensit zu einem namens Austenit. Mit dieser Änderung kann sie Arbeit verrichten.

In einer Abwägung zwischen Kraft, Arbeitsweg und Wärmehaushalt weist das Formgedächtniselement 4 bevorzugt zumindest über die Hälfte seiner Länge eine Querschnittfläche auf, die größer als der Faktor 0,002 seiner Länge im Quadrat ist.

Elektrische Leitungen zur Betätigung des Heizelementes 5 sind in Kabel 11 geführt. Das Heizelement 5 ist ein Widerstand mit sogenannter "positive temperature coefficient" oder "PTC", welcher bei seiner Betätigung selbstregelnd auf etwa 120 °C erhitzt. Durch Berührung mit dem Heizelement 5 wird das Wärmeleitelement 6 aufgewärmt, welches seinerseits das Formgedächtniselement 4 berührt. In einer nicht dargestellten Ausführung mag das Heizelement eine elektrische Speiseeinrichtung sein, welche zwecks Heizung einen elektrischen Strom durch das Formgedächtniselement oder durch einen um es gewickelten Widerstanddraht erzeugt.

Infolge seines Aufwärmens vergrößert das Formgedächtniselement 4 seine Länge dadurch, dass es seine Biegung reduziert. Das Formgedächtniselement 4 ist so dimensioniert worden, dass es dabei Übertragungselement 8 gegen die Wirkung der Feder 9 hin anhebt, weswegen das Anschlusselement 3 nicht mehr herunter gedrückt wird.

Übrigens lässt sich der Stellantrieb 1 händisch mittels Verstellhebel 10 einschalten und abschalten.

Der Stellantrieb 1 ist mittels eines Bajonettrings 12 auf einem Wasserventil 13 mit einer komplementären Bajonettflansche 14 montiert. Dort drückt nun das Anschlusselement 3 einen Stößel 15 nicht mehr herunter, weshalb eine kleinere Feder 16 ihn samt Ventilteller 17 aufhebt und dem Wasser freie Bahn gibt.

Zum Abschalten wird die Betätigung des Heizelementes 5 aufgehoben. Dadurch kühlt das Formgedächtniselement 4 wieder ab. Bei etwa 80 °C fängt es an, seine Struktur zu Martensit zurück zu wechseln, was bei etwa 50 °C vollendet ist. Da es einen intrinsischen Zweiwegeffekt aufweist, kehrt es ohne Hilfe äußerer Krafteinwirkung zum Ausgangsform zurück. Dies setzt ein sogenanntes Training gemäß einem den Anforderungen entsprechenden Verfahren voraus. In einer nicht dargestellten Ausführung wäre ein Formgedächtnismaterial mit äußerem Zweiwegeffekt oder mit Einwegeffekt, welches dies nur mithilfe einer äußeren Kraft macht, auch möglich. Dafür wäre kein Training nötig.

Zwecks gleichmäßiger Heizung und Kühlung ist die Oberfläche, auf der das Wärmeleitelement 6 das Formgedächtniselement 4 berührt, bevorzugt größer als der Faktor 0,1 der gesamten Oberfläche des Formgedächtniselementes 4. Sogar falls in nicht dargestellter Ausführung das Heizelement direkt am Formgedächtniselement anliegt, zumindest während der Heizung, verteilt das Wärmeleitelement wegen den typischen Eigenschaften von Formgedächtnismaterialien die Wärme besser. Bevorzugt ist das Heizelement 5 so gestaltet und im Gehäuse angeordnet, dass es während seiner Betätigung das Formgedächtniselement 4 oder das dann das Formgedächtniselement 4 berührende Wärmeleitelement 6 berührt, und ist die Oberfläche, auf der das Heizelement 5 so direkt oder indirekt das Formgedächtniselement 4 beheizt, größer als der Faktor 0,1 der gesamten Oberfläche des Formgedächtniselementes 4.

Ist ein Formgedächtniselement einmal aufgewärmt worden, und bleibt die korrespondierende Stellung des Stellantriebs über eine längere Zeit gefragt, so mag das Wärmeleitelement in einer nicht dargestellten Ausführung auf Distanz zum Formgedächtniselement gebracht werden, zum Beispiel durch Einschaltung eines kleineren, zusätzlichen Formgedächtniselementes.

Wie ersichtlich in Figur 2 weist der Stellantrieb 1 auch ein Schaltelement 18 auf. Das Schaltelement umfasst einen Körper der ein sogenanntes Bimetall ist. Der Körper ist entlang einem dort besonders flexiblen Metallblech 6 angeordnet und durch Nieten mit ihm verbunden. Alternativ ist der Körper am Metallblech 6 angeklebt.

Bereits in der Herstellung des Stellantriebs wird das Metallblech 6 dermassen gebogen, dass es in etwa die gezeigte Krümmung auch ohne jede Kraftauswirkung beibehält. Die Kraft des Bimetalles vermag das Ende des Metallblechs 6 nur um wenige Millimeter in die Richtung des Heizelementes 5 oder von ihm weg zu bewegen. Bei den Fertigungstoleranzen reicht diese Bewegung aus, um die Wärmeleitberührung mit Sicherheit und weit über die Mindestanzahl an Stellzyklen hinaus zu erstellen und abzubrechen. Bevorzugt weist das Metallblech 6 Vorort eine kleinere Stärke als sonstwo auf.

Der obere und der untere Rand am Ende des Metallblechs 6, wo es nach der Erstellung der Wärmeleitberührung die Feder 9 berührt, sind abgerundet. Bei der Abkühlung des Formgedächtniselementes 4 bewegt sich nämlich die Feder 9. Gegebenenfalls soll eine Federwindung reibungsarm über einem solchen Rand entlang das Metallblech 6 schieben.

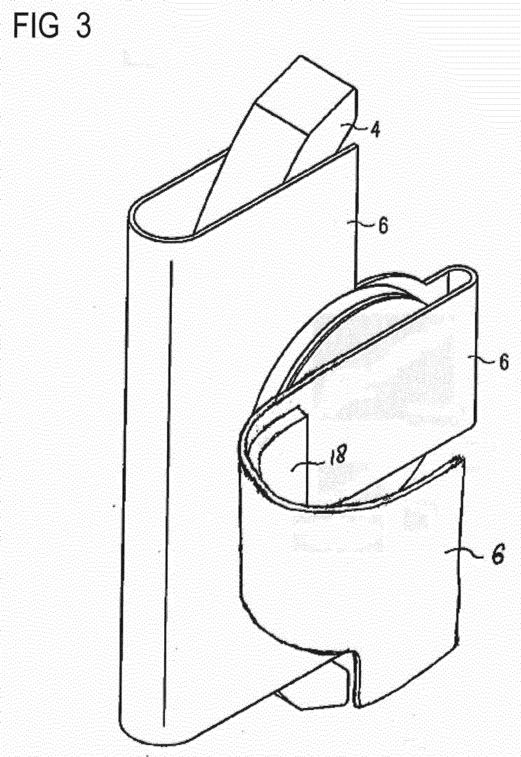

Figur 3 zeigt wie das Wärmeleitelement 6 das Heizelement 5 zwecks Wärmeübertragung und Halterung an dessen sich im Wesentlichen gegenüberliegenden Seiten berührt. Bevorzugt ist das Heizelement 5 federnd eingeklemmt oder passend aufgenommen worden, damit ein Klebemittel überflüssig ist.

Für ein Beispiel des statischen und dynamischen Verhaltens des Stellantriebes ist eine hohe aber in Regelanlagen für Heizung, Lüftung oder Klima nicht ausserordentlich hohe Umgebungstemperatur von 40°C gesetzt worden. Das Heizelement 5 beheizt das Formgedächtniselement 4 und das Schaltelement 18, weshalb das Formgedächtniselement 4 das Anschlusselement 3 in eine Endstellung verstellt, und das Schaltelement 18 die Wärmeleitberührung mit der Feder 9 abbricht. Über längere Zeit tritt ein nahezu stabiles Gleichgewicht ein. Das Heizelement 5 hält seine Temperatur von 120°C dann recht stabil, wobei zwecks Feinregelung nur noch kleine Schwankungen auftreten.

Das erste Wärmeleitelement 6 strahlt im beheizten Gleichgewicht via seine grosse freie Gesamtoberfläche mehr Zusatzwärme aus, als es aus den kühleren restlichen Teilen des Stellantriebs aufnimmt. Deswegen ist seine Temperatur leicht tiefer und senkt wegen seinem kleinen Wärmeflusswiderstand mit der Distanz zur Heizquelle weiter ab.

Das Formgedächtniselement 4 weist somit eine leicht tiefere Höchsttemperatur von etwa 115°C auf, welche an seinen Enden wegen seiner beschränkten Wärmeleitfähigkeit um bis zu 8°C tiefer ist, trotz dem günstigen Verhältnis zwischen Volumen und freier Oberfläche und trotz grossflächiger Berührung des Wärmeleitelementes 6.

An der anderen Seite vom Heizelement 5 hat im beheizten Gleichgewicht das Schaltelement 18 auch eine Temperatur von etwa 115°C, welche jedoch mit der Distanz zum Heizelement 5 auf ungefähr 110°C abfällt.

Das Schaltelement 18 hält im beheizten Gleichgewicht das erste Wärmeleitelement 6 von der Feder 9 entkoppelt. Die Feder 9 ist permanent wärmeleitend gekoppelt an der oberen Umhüllung des Gehäuses 2, welche aus Metall gebildet ist. Vor allem wegen der Wärmeausstrahlung durch das erste Wärmeleitelement 6 weist die Feder 9 eine erhöhte Temperatur von etwa 50°C auf, welche wegen der grossen Wärmeleitfähigkeit von Stahl, wegen des grossen Verhältnisses zwischen ihrem Volumen und ihrer freien Oberfläche und wegen der gleichmassigen Bestrahlung ziemlich uniform ist. Oben, in der Nähe ihrer Ankopplung an der Metallumhüllung des Gehäuses 2, mag ihre Temperatur etwas kleiner sein.

Wird nun das Heizelement 5 abgeschaltet, so senken aus dem beheizten Gleichgewicht heraus die Temperaturen im Schaltelement 18 und im Heizelement 5 rascher als im Formgedächtniselement 4, weil dessen Wärmekapazität viel höher ist. Ein Bimetall spricht ohnehin typisch auf kleineren Temperaturänderungen an als es ein Formgedächtniselement tut, da die Kraftausübung durch stoffschlüssig oder formschlüssig miteinander verbunden Metallschichten mit unterschiedlichen Wärmeausdehnungskoeffizienten ungefähr linear mit der Temperatur verändert, nicht erst bis die Strukturveränderung des Formgedächtnismaterials eingeleitet ist.

Das Schaltelement 18 und das erste Wärmeleitelement 6 sind so ausgelegt, dass das Schaltelement 18 in etwa 6 Sekunden, etwa bei einer Durchschnittstemperatur von 105°C, die Wärmeleitberührung des Wärmeleitelementes 6 mit der Feder 9 und der daran thermisch angekoppelten Metallumhüllung des Gehäuses 2, erstellt. Weil nun eine grosse Metallmasse auf etwa 50°C wärmeleitend über einem Grossteil dessen Oberfläche am Formgedächtniselement 4 angekoppelt ist, wenn auch über einen Weg mit Wärmeflusswiderstand, beschleunigt sich die Abkühlung des Formgedächtniselementes 4 wesentlich. In weiteren 7 Sekunden, während denen die Temperatur des Formgedächtniselementes 4 ungefähr auf 80°C gesenkt worden ist, fängt der Strukturwechsel von Austenit zu Martensit an. Es dauert dann noch etwa 10 Sekunden bis das Formgedächtniselement 4 das Anschlusselement 3 in die andere Endstellung verstellt hat, wobei diese Zeit mit der Zahl der bereits absolvierten Stellzyklen allmählich zunimmt.

Ein früheres Schalten des Schaltelementes 18, zum Beispiel bei einer Durchschnittstemperatur von 110°C, würde bei einer tieferen Umgebungstemperatur in der Regelanlage für Heizung, Lüftung oder Klima das Risiko auslösen, dass das Schaltelement 18 durch kleine Fluktuationen im beheizten Gleichgewicht spontan die Wärmeleitberührung des Wärmeleitelementes 6 mit der Feder 9 erstellt, oder dass es unter Umständen dem Schaltelement 18 gar nicht gelingt, diese Wärmeleitberührung abzubrechen.

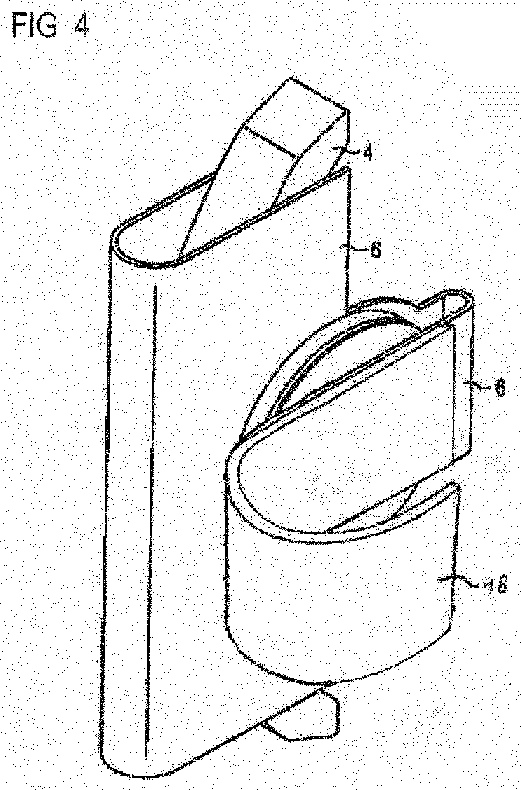

Figur 4 zeigt eine alternative Gestaltung des Schaltelementes 18. Ein Bimetall-Körper ist im Wesentlichen länglich gestaltet und nur in der Nähe eines seiner Enden mit dem Wärmeleitelement 6 verbunden worden. Am anderen Ende erstellt der Körper bei seinem Erstrecken eine Wärmeleitberührung an der Feder 9.

In einer nicht dargestellten Ausführung weist das Schaltelement am Ende des Bimetall-Körpers wo es die Feder berührt, einen vertikal orientierten Metallstreifen auf. Dieser Metallstreifen berührt die Feder wegen seiner Länge in der Vertikale an mehr Federwindungen und wegen seiner dem Federinnenradius entsprechenden Wölbung im Horizontaldurchschnitt an jeder Federwindung optimal.

Bevorzugt ist der Rand an den Enden des Metallstreifens abgerundet, damit eine sich bei der Abkühlung des Formgedächtniselementes bewegende Federwindung reibungsarm über dem Rand entlang den Metallstreifen schieben kann.

In einer nicht dargestellten Ausführung ist das Schaltelement aus der Figur 3 oder dasjenige aus der Figur 4 an der gegenüberliegenden Seite von sowohl Heizelement als Formgedächtniselement angeordnet, und zwar mit einer in etwa gespiegelten Krümmung. Weil dort die Temperaturen im Beispiel des beheizten Gleichgewichts leicht tiefer sind, enthält dieses Schaltelement ein Bimetall, das in einem entsprechend tieferen Temperaturbereich kippt, um insbesondere bei tieferen Umgebungstemperaturen ein spontanes Umschalten zu vermeiden. Wegen der hohen Wärmekapazität des Formgedächtniselementes benötigt das Schaltelement in dieser Ausführung mehr Zeit um aus dem beheizten Gleichgewicht heraus die Wärmeleitberührung an der Feder und an der daran thermisch angekoppelten Metallumhüllung des Gehäuses zu erstellen. Ist aber einmal diese Wärmeleitberührung erstellt, so fliesst die Wärme in dieser Ausführung etwas schneller aus dem Formgedächtniselement heraus, da der Fliessweg kürzer ist.

In einer nicht dargestellten Ausführung ist ein ähnliches Schaltelement wie aus der Figur 3 oder aus der Figur 4 um 90° nach oben gedreht. Dort, sozusagen an der Decke, schaltet es eine Wärmeleitberührung an einer Oberfläche der oberen Metallumhüllung des Gehäuses, oder an einen speziellen Metallkörper der an der oberen Metallumhüllung des Gehäuses thermisch angekoppelt ist.

Die obere Metallumhüllung des Gehäuses ist in einer nicht dargestellten Ausführung an ihrer Innenseite durch eine Schicht aus thermisch isolierendem Material abgedeckt, natürlich mit Ausnahme der Oberfläche wo das Schaltelement eine Wärmeleitberührung erstellen kann, oder mit Ausnahme der Stelle wo die Feder oder ein speziellen Metallkörper thermisch an der oberen Metallumhüllung des Gehäuses angekoppelt ist.

In einer weiteren nicht dargestellten Ausführung umfasst das Schaltelement einen Körper der seine Länge ändern kann und der sich zwischen gegenüberliegenden Teilen eines gekrümmten flexiblen Wärmeleitelementes erstreckt. Der Körper mag ein Wachszylinderantrieb oder ein Piezoantrieb sein, oder bevorzugt ein elektrisches Relais. Alternativ zur Flexibilität weist das Wärmeleitelement zwischen den gegenüberliegenden Teilen ein Scharnier auf.

Optional weist das Schaltelement in einer nicht dargestellten Ausführung ein eigenes Schaltheizelement auf. Dies erlaubt dessen weitgehende thermische Entkopplung vom Heizelement und vom Formgedächtniselement, was ein rasches und zuverlässiges Umschalten begünstigt. Es bedeutet jedoch auch einen Fertigungsmehraufwand.

## Patentansprüche

1. Stellantrieb,
- mit einem Gehäuse (2), sowie zumindest
- mit einem Anschlusselement (3),
- mit einem Formgedächtniselement (4), dessen Form sich durch Beheizung ändert, wobei das Formgedächtniselement (4) so im Gehäuse (2) angeordnet ist, dass es durch seine Formänderung das Anschlusselement (3) verstellt,
- mit einem Wärmeleitelement (6), das so gestaltet und im Gehäuse (2) angeordnet ist, dass es das Formgedächtniselement (4) zumindest zeitweise berührt,
- mit einem Schaltelement (18), das so gebildet und im Gehäuse (2) angeordnet ist, dass es bei einer Abbruchbetätigung eine Wärmeleitberührung zwischen zumindest einem Wärmeleitelement (9) und entweder dem Formgedächtniselement (4) oder zumindest einem dem Formgedächtniselement (4) berührenden Wärmeleitelement (6) abbricht, und dass es bei einer Erstellungsbetätigung die Wärmeleitberührung erstellt, und
- mit einem Heizelement (5), das so gestaltet und im Gehäuse (2) angeordnet ist, dass es bei seiner Betätigung das Formgedächtniselement (4) beheizt,
**dadurch gekennzeichnet, dass**
das Formgedächtniselement (4) und das Schaltelement (18) so gebildet und im Gehäuse (2) angeordnet sind, dass bei Erstellungsbetätigung nach einer Abbruchbetätigung, dank welcher das Schaltelement (18) die Wärmeleitberührung abgebrochen hat, und gleichzeitiger Beendung einer Beheizung des Formgedächtniselementes (4), dank welcher es das Anschlusselement (3) in eine Endstellung verstellt hat, das Schaltelement (18) die Wärmeleitberührung erstellt, bevor das Formgedächtniselement (4) das Anschlusselement (3) in eine gegenüberliegende Endstellung verstellt hat.

2. Stellantrieb gemäß Anspruch 1, wobei das Schaltelement (18) so gebildet und im Gehäuse (2) angeordnet ist, dass bei Betrieb des Stellantriebs in Raumtemperatur das Schaltelement (18) die Wärmeleitberührung innerhalb von 12 Sekunden nach der Beendung der Beheizung des Formgedächtniselementes (4) erstellt.

3. Stellantrieb gemäß einem der vorhergehenden Ansprüche,
- wobei das Schaltelement (18) zumindest aus einem Körper gebildet ist, dessen Form sich bei einer Abbruchbetätigung und bei einer Erstellungsbetätigung ändert, und
- wobei das Schaltelement (18) durch diese Formänderungen die Wärmeleitberührung abbricht, beziehungsweise erstellt.

4. Stellantrieb gemäß einem der vorhergehenden Ansprüche,
- wobei das Schaltelement (18) aus einem wärmeleitenden Körper gebildet ist, dessen Form sich bei einer Abbruchbetätigung und bei einer Erstellungsbetätigung ändert, und
- wobei das Schaltelement (18) durch diese Formänderungen die Wärmeleitberührung abbricht, beziehungsweise erstellt.

5. Stellantrieb gemäß einem der vorhergehenden Ansprüche, wobei das Schaltelement (18) zumindest aus einem Körper gebildet ist, dessen Form sich durch Beheizung ändert, und so im Gehäuse (2) angeordnet ist, dass es durch diese Formänderung die Wärmeleitberührung abbricht oder erstellt.

6. Stellantrieb gemäß einem der vorhergehenden Ansprüche,
- wobei das Schaltelement (18) zumindest aus einem Körper gebildet ist, dessen Form sich durch Beheizung ändert, und so im Gehäuse (2) angeordnet ist, dass es durch diese Formänderung die Wärmeleitberührung abbricht,
- wobei das Heizelement (5) so gestaltet und im Gehäuse (2) angeordnet ist, dass es bei seiner Betätigung das Formgedächtniselement (4) und das Schaltelement (18) beheizt, und
- wobei das Formgedächtniselement (4) und das Schaltelement (18) so gebildet und im Gehäuse (2) angeordnet sind, dass bei Beendung einer Beheizung, dank welcher das Schaltelement (18) die Wärmeleitberührung abgebrochen hat und das Formgedächtniselement (4) das Anschlusselement (3) in eine Endstellung verstellt hat, das Schaltelement (18) die Wärmeleitberührung erstellt, bevor das Formgedächtniselement (4) das Anschlusselement (3) in eine gegenüberliegende Endstellung verstellt hat.

7. Stellantrieb gemäß einem der vorhergehenden Ansprüche,
- wobei das Formgedächtniselement (4) im Wesentlichen gerade gestaltet ist, und
- wobei das Formgedächtniselement (4) durch Beheizung seine Länge ändert, insbesondere durch Biegen oder Strecken.

8. Stellantrieb gemäß einem der vorhergehenden Ansprüche, wobei das Schaltelement (18) zumindest aus einem Körper gebildet ist, der aus zumindest zwei Materialien mit unterschiedlichen Wärmeausdehnungskoeffizienten zusammengesetzt ist, insbesondere ein Thermobimetall.

9. Stellantrieb gemäß einem der vorhergehenden Ansprüche, wobei das Schaltelement (18) zumindest aus einem flexiblen Metallblech (6) gebildet ist.

10. Stellantrieb gemäß einem der vorhergehenden Ansprüche,
- wobei der Stellantrieb zumindest einen Metallkörper (9, 2) aufweist, dessen gesamte Oberfläche frei von Berührung durch das Formgedächtniselement (4) oder durch das Heizelement (5) ist, und
- wobei die Wärmeleitberührung zwischen einerseits entweder dem Metallkörper (9) oder zumindest einem dem Metallkörper (2) berührenden Wärmeleitelement (9), und andererseits entweder dem Formgedächtniselement (4) oder zumindest einem dem Formgedächtniselement (4) berührenden Wärmeleitelement (6) ist.

11. Stellantrieb gemäß einem der vorhergehenden Ansprüche,
- wobei der Stellantrieb zumindest einen Metallkörper aufweist, der zumindest teilweise das Gehäuse (2) bildet, und
- wobei die Wärmeleitberührung zwischen einerseits entweder dem Metallkörper oder zumindest einem dem Metallkörper berührenden Wärmeleitelement (9), und andererseits entweder dem Formgedächtniselement (4) oder zumindest einem dem Formgedächtniselement (4) berührenden Wärmeleitelement (6) ist.

12. Stellantrieb gemäß einem der vorhergehenden Ansprüche, wobei der Stellantrieb für den Einsatz in Regelanlagen für Heizung, Lüftung oder Klima geeignet ist.

## Claims

1. Actuator,
- having a housing (2), and at least
- having a connecting element (3),
- having a shape memory element (4), the shape of which changes as a result of heating, the shape memory element (4) being arranged in the housing (2) such that it displaces the connecting element (3) as a result of its shape change,
- having a heat conducting element (6), which is configured and is arranged in the housing (2) such that it touches the shape memory element (4), at least from time to time,
- having a switching element (18), which is formed and arranged in the housing (2) such that, in the event of a break actuation, it breaks a heat conducting contact between at least one heat conducting element (9) and either the memory shape element (4) or at least one heat conducting element (6) touching the shape memory element (4), and that, in the event of a setup actuation, it sets up the heat conducting contact, and
- having a heating element (5), which is configured and arranged in the housing (2) such that, when actuated, it heats the shape memory element (4),
**characterized in that**
the shape memory element (4) and the switching element (18) are formed and arranged in the housing (2) such that, during a setup actuation after a break actuation, by virtue of which the switching element (18) has broken the heat conducting contact, and with simultaneous termination of heating of the shape memory element (4), by virtue of which it has displaced the connecting element (3) into an end position, the switching element (18) sets up the heat conducting contact before the shape memory element (4) has displaced the connecting element (3) into an opposite end position.

2. Actuator according to Claim 1, wherein the switching element (18) is formed and arranged in the housing (2) such that, during operation of the actuator at room temperature, the switching element (18) sets up the heat conducting contact within 12 seconds after the heating of the shape memory element (4) has been terminated.

3. Actuator according to one of the preceding claims
- wherein the switching element (18) is formed at least from a body the shape of which changes during a break actuation and during a setup actuation, and
- wherein the switching element (18) breaks or sets up the heat conducting contact as a result of these shape changes.

4. Actuator according to one of the preceding claims,
- wherein the switching element (18) is formed from a heat conducting body the shape of which changes during a break actuation and during a setup operation, and
- wherein the switching element (18) breaks or sets up the heat conducting contact as a result of these shape changes.

5. Actuator according to one of the preceding claims, wherein the switching element (18) is formed at least from a body the shape of which changes as a result of heating, and is arranged in the housing (2) such that it breaks or sets up the heat conducting contact as a result of this shape change.

6. Actuator according to one of the preceding claims,
- wherein the switching element (18) is formed at least from a body the shape of which changes as a result of heating, and is arranged in the housing (2) such that it breaks the heat conducting contact as a result of this shape change,
- wherein the heating element (5) is configured and arranged in the housing (2) such that it heats the shape memory element (4) and the switching element (18) when it is actuated, and
- wherein the shape memory element (4) and the switching element (18) are configured and arranged in the housing (2) such that upon termination of heating, by virtue of which the switching element (18) has broken the heat conducting contact and the shape memory element (4) has displaced the connecting element (3) into an end position, the switching element (18) sets up the heat conducting contact before the shape memory element (4) has displaced the connecting element (3) into an opposite end position.

7. Actuator according to one of the preceding claims,
- wherein the shape memory element (4) is configured to be substantially rectilinear, and
- wherein the shape memory element (4) changes its length as a result of heating, in particular by bending or stretching.

8. Actuator according to one of the preceding claims, wherein the switching element (18) is formed at least from a body which is assembled from at least two materials with different thermal expansion coefficients, in particular a thermostatic bimetal.

9. Actuator according to one of the preceding claims, wherein the switching element (18) is formed at least from a flexible metal sheet (6).

10. Actuator according to one of the preceding claims,
- wherein the actuator has at least one metal body (9, 2) the entire surface of which is free of contact by the shape memory element (4) or by the heating element (5), and
- wherein the heat conducting contact is between, on the one hand, either the metal body (9) or at least one heat conducting element (9) touching the metal body (2) and, on the other hand, either the shape memory element (4) or at least one heat conducting element (6) touching the shape memory element (4).

11. Actuator according to one of the preceding claims,
- wherein the actuator has at least one metal body which at least partly forms the housing (2), and
- wherein the heat conducting contact is between, on the one hand, either the metal body or at least one heat conducting element (9) touching the metal body and, on the other hand, either the shape memory element (4) or at least one heat conducting element (6) touching the shape memory element (4).

12. Actuator according to one of the preceding claims, wherein the actuator is suitable for use in control systems for heating, ventilation or air conditioning.

## Revendications

1. Mécanisme de commande,
- comprenant un boîtier (2) ainsi que, au moins,
- un élément de connexion (3),
- un élément à mémoire de forme (4) qui change de forme en étant chauffé, l'élément à mémoire de forme (4) étant agencé dans le boîtier (2) de telle façon qu'en changeant de forme il déplace l'élément de connexion (3),
- un élément thermoconducteur (6), conçu et agencé dans le boîtier (2) de telle façon qu'il est en contact avec l'élément à mémoire de forme (4) au moins par moments,
- un élément de commutation (18), réalisé et agencé dans le boîtier (2) de telle façon que lors d'une manoeuvre d'interruption, il interrompt un contact thermoconducteur entre au moins un élément thermoconducteur (9) et, ou l'élément à mémoire de forme (4) ou au moins un élément thermoconducteur (6) en contact avec l'élément à mémoire de forme (4), et lors d'une manoeuvre d'établissement, il établit le contact thermoconducteur, et
- un élément chauffant (5), conçu et agencé dans le boîtier (2) de telle façon que lorsqu'il est actionné, il chauffe l'élément à mémoire de forme (4),
**caractérisé en ce que**
l'élément à mémoire de forme (4) et l'élément de commutation (18) sont réalisés et agencés dans le boîtier (2) de telle façon que lors d'une manoeuvre d'établissement, après une manoeuvre d'interruption grâce à laquelle l'élément de commutation (18) a interrompu le contact thermoconducteur, et tout en ayant mis fin au chauffage de l'élément à mémoire de forme (4) grâce auquel celui-ci a déplacé l'élément de connexion (3) dans une position terminale, l'élément de commutation (18) établit le contact thermoconducteur avant que l'élément à mémoire de forme (4) n'ait déplacé l'élément de connexion (3) dans une position terminale opposée.

2. Mécanisme de commande selon la revendication 1, l'élément de commutation (18) étant réalisé et agencé dans le boîtier (2) de telle façon que lorsque le mécanisme de commande fonctionne à température ambiante, l'élément de commutation (18) établit le contact thermoconducteur dans un délai de 12 secondes après avoir mis fin au chauffage de l'élément à mémoire de forme (4).

3. Mécanisme de commande selon l'une des revendications précédentes,
- l'élément de commutation (18) étant au moins formé d'un corps qui change de forme lors d'une manoeuvre d'interruption et lors d'une manoeuvre d'établissement, et
- grâce à ces changements de forme, l'élément de commutation (18) interrompant, respectivement établissant le contact thermoconducteur.

4. Mécanisme de commande selon l'une des revendications précédentes,
- l'élément de commutation (18) étant formé d'un corps thermoconducteur qui change de forme lors d'une manoeuvre d'interruption et lors d'une manoeuvre d'établissement, et
- grâce à ces changements de forme, l'élément de commutation (18) interrompant, respectivement établissant le contact thermoconducteur.

5. Mécanisme de commande selon l'une des revendications précédentes,
l'élément de commutation (18) étant au moins formé d'un corps qui change de forme en étant chauffé, et étant agencé dans le boîtier (2) de telle façon qu'il interrompt ou établit le contact thermoconducteur grâce à ce changement de forme.

6. Mécanisme de commande selon l'une des revendications précédentes,
- l'élément de commutation (18) étant au moins formé d'un corps qui change de forme en étant chauffé, et étant agencé dans le boîtier (2) de telle façon qu'il interrompt le contact thermoconducteur grâce à ce changement de forme,
- l'élément chauffant (5) étant conçu et agencé dans le boîtier (2) de telle façon que lorsqu'il est actionné, il chauffe l'élément à mémoire de forme (4) et l'élément de commutation (18), et
- l'élément à mémoire de forme (4) et l'élément de commutation (18) étant réalisés et agencés dans le boîtier (2) de telle façon que lorsqu'il est mis fin au chauffage grâce auquel l'élément de commutation (18) a interrompu le contact thermoconducteur et l'élément à mémoire de forme (4) a déplacé l'élément de connexion (3) dans une position terminale, l'élément de commutation (18) établit le contact thermoconducteur avant que l'élément à mémoire de forme (4) n'ait déplacé l'élément de connexion (3) dans une position terminale opposée.

7. Mécanisme de commande selon l'une des revendications précédentes,
- l'élément à mémoire de forme (4) étant de forme sensiblement droite, et
- l'élément à mémoire de forme (4) changeant de longueur en étant chauffé, notamment par pliage ou étirage.

8. Mécanisme de commande selon l'une des revendications précédentes,
l'élément de commutation (18) étant au moins formé d'un corps composé d'au moins deux matériaux à coefficients de dilatation thermique différents, notamment un bilame thermique.

9. Mécanisme de commande selon l'une des revendications précédentes,
l'élément de commutation (18) étant au moins formé d'une tôle métallique flexible (6).

10. Mécanisme de commande selon l'une des revendications précédentes,
- le mécanisme de commande comprenant au moins un corps métallique (9, 2) dont l'ensemble de la surface est exempte de tout contact par l'élément à mémoire de forme (4) ou par l'élément chauffant (5), et
- le contact thermoconducteur étant entre, d'une part, ou le corps métallique (9) ou au moins un élément thermoconducteur (9) en contact avec le corps métallique (2) et, d'autre part, ou l'élément à mémoire de forme (4) ou au moins un élément thermoconducteur (6) en contact avec l'élément à mémoire de forme (4).

11. Mécanisme de commande selon l'une des revendications précédentes,
- le mécanisme de commande comprenant au moins un corps métallique qui forme au moins partiellement le boîtier (2), et
- le contact thermoconducteur étant entre, d'une part, ou le corps métallique ou au moins un élément thermoconducteur (9) en contact avec le corps métallique et, d'autre part, ou l'élément à mémoire de forme (4) ou au moins un élément thermoconducteur (6) en contact avec l'élément à mémoire de forme (4).

12. Mécanisme de commande selon l'une des revendications précédentes,
le mécanisme de commande étant approprié pour une utilisation dans des installations de régulation de chauffage, de ventilation ou de climatisation.
